# EUROPÄISCHE PATENTSCHRIFT

(11) **EP 1 935 690 B1**
(45) Veröffentlichungstag und Bekanntmachung des Hinweises auf die Patenterteilung: **28.09.2016**
(21) Anmeldenummer: 07024252.4
(22) Anmeldetag: 14.12.2007
(51) Int. Cl.: B60J 7/12, B60J 7/19, B60J 7/20

(54) **Kraftfahrzeug mit einem unterhalb eines Deckelteils ablegbaren Dach oder Dachteil**
Motor vehicle with a foldable soft top or roof component, stowable under a cover
Véhicule automobile doté d'un toit ou d'une partie de toit sous une partie de toit

(30) Priorität: 21.12.2006 DE 102006060662
(43) Veröffentlichungstag der Anmeldung: 25.06.2008
(73) Patentinhaber: Valmet Automotive Oy, 23500 Uusikaupunki (FI)
(72) Erfinder: Habacker, Norbert, 49565 Bramsche (DE)
(74) Vertreter: Kronthaler, Schmidt & Coll.

(56) Entgegenhaltungen:
- EP-A1- 0 649 765
- EP-A1- 0 949 102
- EP-A1- 1 449 698
- WO-A1-2006/066526
- DE-A1-102004 038 221

## Beschreibung

Die Erfindung betrifft ein Kraftfahrzeug mit einem beweglichen und in der Karosserie unterhalb eines Deckelteils ablegbaren Dach oder zumindest Dachteil, wobei für die Deckelteilbewegung ein Gestänge und zumindest eine Sicherung für die Halterung des Deckelteils in einer geschlossenen Stellung gegen unbeabsichtigte Öffnung vorgesehen ist, nach dem Oberbegriff des Anspruchs 1.

Es ist bekannt, ein derartiges Deckelteil über ein Schloß sichern zu können, um dadurch ein Aufhebeln des geschlossenen Deckelteils von außen oder ein unbeabsichtigtes Öffnen des Deckelteils während der Fahrt - zum Beispiel beim Überfahren von Unebenheiten - zuverlässig unterbinden zu können.

Derartige Schlösser liegen häufig in der vertikalen Fahrzeuglängsebene eines für die Deckelteilbewegung wirksamen Hydraulikzylinders. Bei der Dachablage ist daher der für dieses zur Verfügung stehende Raum eingeschränkt. Diese ist insofern besonders problematisch, als von dem Schloß in seiner Schließstellung einen Teil des Gestänges übergreifen und daher seine Bewegungsmöglichkeit nach oben unterbinden muß. Zum Dachschließen muß daher das Schloß zunächst aus der Bewegungsbahn so weit herausbewegt werden, dass die Abwärtsbewegung nicht blockiert ist. Dies erfordert zusätzlichen Raum. Insbesondere wenn der Dachablageraum bei geschlossenem Dach auch für Gepäckablage zur Verfügung stehen soll, ist zudem der Gepäckraum durch das Schloß eingegrenzt.

In der EP 0 949 102 A1 ist ein Verdeck zur Bewegung eines Kofferraumdeckels beschrieben. Zur Entriegelung eines Zapfens eines Schlosses, welcher zur Festlegung des Kofferraumdeckels in geschlossener Position vorgesehen ist, ist eine weitere Antriebseinrichtung mit einem Riegel, einem Druckknopf und einem den Druckknopf mit dem Riegel verbindenden Kabel vorgesehen, welche beispielsweise elektrisch ausgeführt ist.

Der Erfindung liegt die Aufgabe zugrunde ein Kraftfahrzeug zu schaffen, bei dem kein zusätzlicher Antrieb für das Schloss erforderlich ist.

Die Erfindung löst dieses Problem durch ein Kraftfahrzeug, das insbesondere auch ein Vollcabriolet-Fahrzeug sein kann, mit den Merkmalen des Anspruchs 1. Hinsichtlich vorteilhafter Ausgestaltungen und Weiterbildungen der Erfindung wird auf die weiteren Ansprüche 2 bis 12 verwiesen.

Bei der erfindungsgemäßen Lösung ist kein zusätzlicher Antrieb für das Schloß erforderlich.

Mit der erfindungsgemäßen Ausbildung ist eine größere zur Verfügung stehende Breite geschaffen. Dies gilt sowohl für die Dachbewegung als auch für eine mögliche Nutzung als Kofferraum. Dadurch dass die Blockiereinrichtung mit einer quer einwärts gerichteten Bewegungskomponente in sichernde Stellung verlagerbar ist, kann sie von quer außen eingreifen und in freigebender Stellung gegenüber dem das Deckelteil bewegenden Gestänge weiter außen gelegen sein. Die Ebene des Gestänges ist dann zur Vergrößerung der lichten Weite unbelastet von Teilen des Schlosses.

Trotzdem kann die Blockiereinrichtung in sichernder Stellung in den lichten Raum, der von dem Deckelteil überdeckbar ist, eingreifen und dort das Gestänge durch Übergreifen eines Teils dieses Gestänge zuverlässig sichern. In freigebender Stellung jedoch kann die Blockiereinrichtung so weit nach außen verlagert sein, dass sie den vom Deckelteil überdeckten Raum vollständig freiläßt und verdeckt von einer den vom Deckelteil überdeckbaren Raum seitlich begrenzenden Karosseriebrüstung halterbar ist. Auch optisch ist damit das Schloß durch das offene Deckelteil weniger störend.

Für eine einfache Bewegung und Konstruktion kann die Blockiereinrichtung einen Schwenkbolzen umfassen, der insbesondere im freigebenden Außer-Eingriff-Sinn vorgespannt ist und daher automatisch - auch bei einem eventuellen Ausfall von Antriebsorganen in diese Stellung übergehen kann.

Dennoch kann der Hydraulikzylinder in der für die Drehmomenterzeugung günstigen Stellung in einer zumindest ungefähr in Fahrzeuglängsrichtung liegenden Vertikalebene liegen. Die Querbewegungskomponente der Blockiereinrichtung kann dann dadurch bewirkt werden, dass diese direkt durch das Antriebsorgan senkrecht zu dieser Bewegungskomponente bewegbar ist, also etwa auch in Fahrzeuglängsrichtung, und erst zum Beispiel durch Abgleiten an einer Führungsbahn nach Art einer Abgleitschräge in die Quereinwärtsbewegung entgegen der Federkraft umgelenkt wird.

Besonders günstig kann das Gestänge ein Eingriffsauge für die Blockiereinrichtung umfassen. Für eine Drehmomentoptimierung der in das Auge eingreifenden Blockiereinrichtung ist dieses vorzugsweise an einem oberen, in Offenstellung des Deckelteils nach oben ausgreifenden Ende des Gestänges angeordnet.

Insbesondere bei einer solchen Drehmomentoptimierung ist es einfach möglich, die Blockiereinrichtung in Doppelfunktion durch seine Bewegung in die Eingriffsstellung auch als Aktuator zur Unterstützung der Schließbewegung des Deckelteils zu verwenden. Damit kann dann der Aktuator zum Schließen des Deckelteils gegen die im Öffnungssinn wirksame Kraft einer Dichtungslinie für den Rand des Deckelteils über einen Fangweg von 5 bis 20 Millimetern wirksam sein und das Deckelteil in der Endphase seiner Schließbewegung gegen die Dichtungslinie pressen.

Besonders günstig ist die Erfindung auch anwendbar auf Teil- oder Vollcabriolet-Fahrzeuge, bei denen ein relativ großes Deckelteil vorgesehen ist, das einerseits in dem genannten Öffnungssinn zur Freigabe der Durchtrittsöffnung für das Dach oder die Dachteile und andererseits zur Freigabe einer Beladeöffnung für Gepäck gegensinnig aufschwenkbar ist.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: ein erfindungsgemäßes - hier als Voll-Cabriolet ausgebildetes - Kraftfahrzeug bei geschlossenem Dach und geschlossenem Deckelteil in schematischer Seitenansicht,
- Fig. 2: eine ähnliche Ansicht wie Fig. 1 bei geöffnetem Deckelteil und noch geschlossenem Dach,
- Fig. 3: eine leicht perspektivische Ansicht von schräg vorne auf im linken Fahrzeugbereich gelegene und das Deckelteil bewegende Teile, ungefähr entsprechend dem Ausschnitt III in Fig. 1 in geschlossener Deckelteilstellung,
- Fig. 4: eine ähnliche Ansicht wie Fig. 3, jedoch in die Deckelteilbewegung freigebender Stellung der Blockiereinrichtung,
- Fig. 5: eine ähnliche Ansicht wie Fig. 3, jedoch in gegenüber dieser leicht gedrehter und mehr von vorne schauender Perspektive,

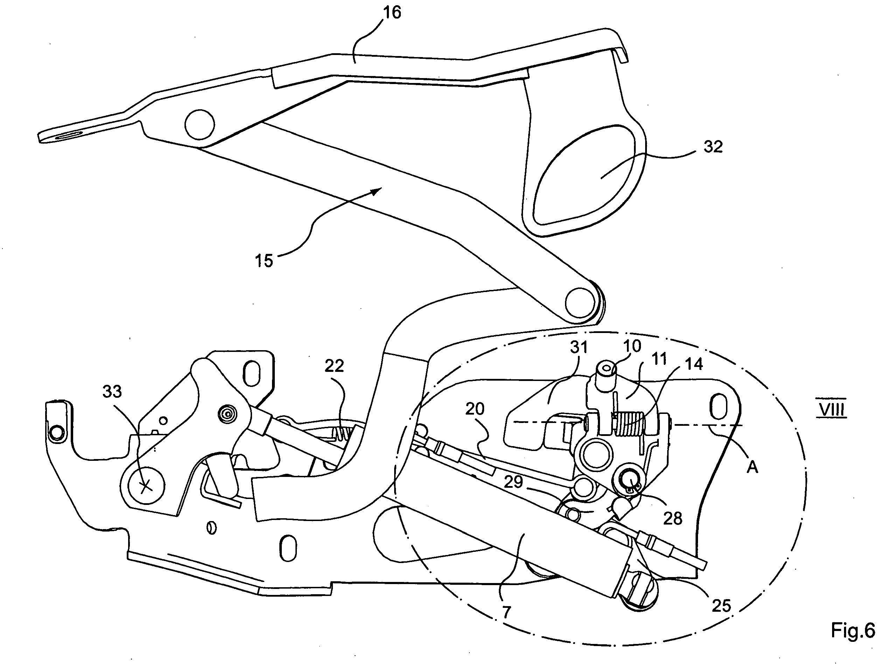

- Fig. 6: eine ähnliche Ansicht wie Fig. 4 bei beginnendem Anheben des - selbst nicht eingezeichneten - Deckelteils,

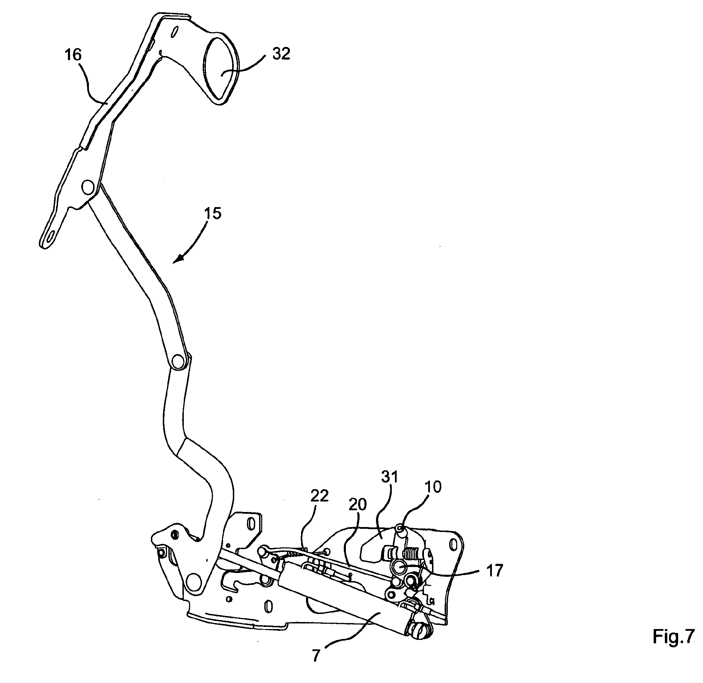

- Fig. 7: eine ähnliche Ansicht wie Fig. 6 bei vollständig geöffnetem Deckelteil,
- Fig. 8: eine Detailansicht des Ausschnitts VIII in Fig. 6 in Offenstellung der Blockiereinrichtung,
- Fig. 9: eine ähnliche Ansicht wie Fig. 8 bei Kraftbeaufschlagung im Öffnungssinn auf ein eine Sperrklinke betätigendes Zugglied zum Entsperren der Bewegung der Blockiereinrichtung,

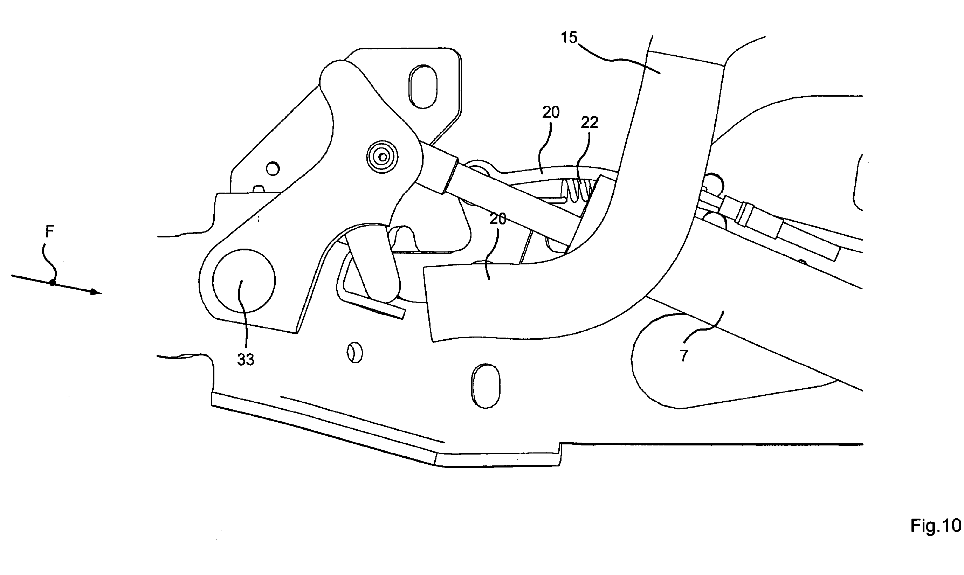

- Fig. 10: eine Detailansicht eines in Fahrtrichtung hinteren Endes des Antriebsorgans und eines durch diesen bewegbaren Zughebels,
- Fig. 11: zwei Querschnitte des Fahrzeugs im Bereich des Deckelteils und der dieses bewegenden Teile in geschlossener und freigebender Stellung der Blockiereinrichtung,
- Fig. 12: eine Draufsicht auf die das Deckelteil seitlich begrenzende Karosseriebrüstung in schließender und freigebender Stellung der Blockiereinrichtung.

Ein erfindungsgemäßes Kraftfahrzeug 1, das als ein mit zumindest einer Rückbank versehenes vier- oder mehrsitziges Fahrzeug oder als Zweisitzer ausgebildet sein kann, weist ein in geschlossener Stellung an einen Windschutzscheibenrahmen 3 anschließendes Dach 2 auf. Dieses kann ganz oder nur teilweise, etwa nur ein zwischen festen Seitenrahmen beweglicher Teil, aufbeweglich sein. Hier ist ein insgesamt zu öffnendes Dach 2 eines Vollcabriolet-Fahrzeugs 1 dargestellt.

Ein solches Vollcabriolet-Dach 2 kann entweder als sog. Retractable Hard-Top (RHT) feste Plattenteile umfassen oder ein von einem flexiblen Bezug überspanntes Soft-Top bilden. Der zu öffnende Teil bzw. das gesamte Dach 2 kann manuell oder voll- oder teilautomatisch zu bewegen sein.

Das Dach 2 - oder der öffnungsfähige Teil von diesem - ist zu seiner Öffnung im hinteren Fahrzeugbereich ablegbar. Hierzu ist eine Eintrittsöffnung in die Karosserie 5 vorgesehen, die zumindest im wesentlichen oberseitig von einem beweglichen Deckelteil 4 verschließbar ist. Dieses muß sowohl beim Dachöffnen als auch beim Dachschließen für den Dachdurchtritt öffnen.

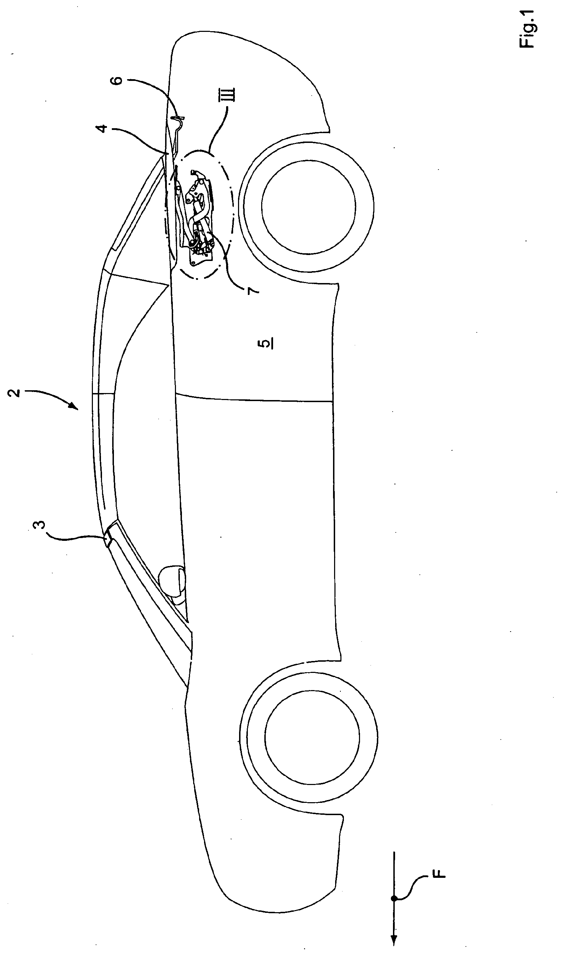

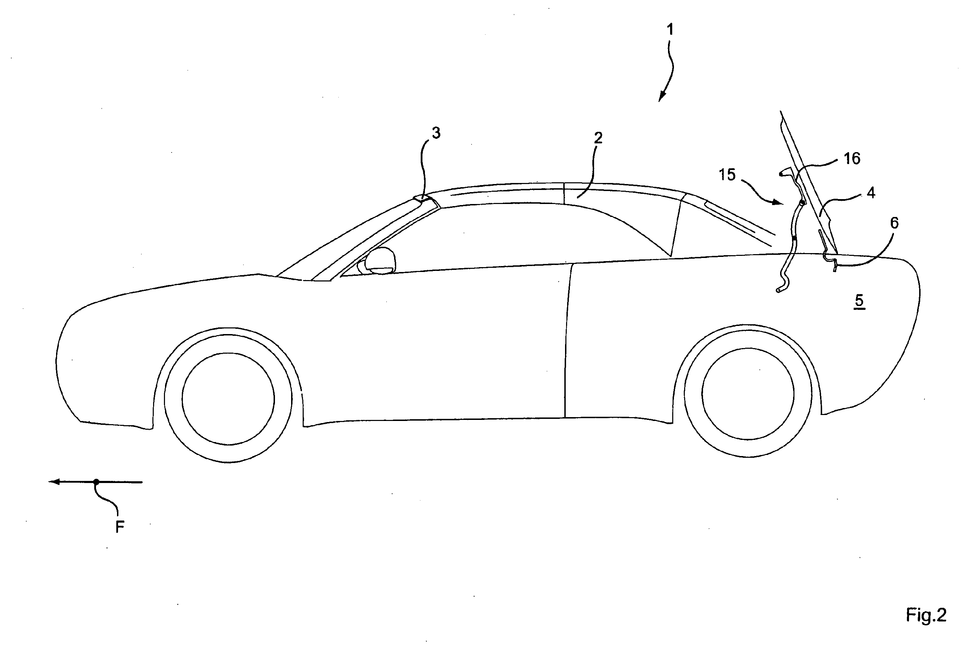

Das Deckelteil 4 ist gemäß dem gezeichneten Ausführungsbeispiel um eine heckwärtige und im wesentlichen quer zur Fahrtrichtung F liegende Schwenkachse 6 zwischen seiner Offenstellung (z. B. Fig. 2) und seiner Schließstellung (z. B. Fig. 1) beweglich. Hier ist ein sog. Schwanenhalsscharnier vorgesehen. Die Bewegung muß keine reine Rotationsbewegung sein. Auch eine überlagerte translatorische und rotatorische Bewegung - etwa auch über ein Mehrgelenk - ist möglich.

Dabei kann das Deckelteil 4 derart ausgebildet sein, dass es den Dachaufnahmeraum und den Kofferraum übergreift. Es ist dann einerseits in dem genannten Öffnungssinn zur Freigabe der Durchtrittsöffnung für das Dach 2 oder die Dachteile und andererseits zur Freigabe einer Beladeöffnung für Gepäck gegensinnig hierzu aufschwenkbar. Auch ein nur in einem Schwenksinn öffnungsfähiges Deckelteil 4, ist, wie hier dargestellt, alternativ möglich.

Zumindest zur Bewegung des Deckelteils 4 zum Öffnen oder Schließen der Durchtrittsöffnung für das Dach 2 (Fig. 2) ist ein seitliches Antriebsorgan 7 vorgesehen, das hier als ungefähr in Fahrzeuglängsrichtung liegender Hydraulikzylinder ausgebildet ist. Dieser liegt im seitlichen Bereich platzsparend in der Karosserie 5. Im Ausführungsbeispiel herrschen an beiden Fahrzeugquerseiten gleiche Verhältnisse, was nicht zwingend ist. Es kann u. U. auch ein Antriebsorgan 7 an nur einer Fahrzeugseite ausreichend sein.

Um das Deckelteil 4 in seiner geschlossenen Stellung zuverlässig gegen ein unbeabsichtigtes oder unbefugtes Öffnen sichern zu können, ist eine insgesamt mit 8 bezeichnete Sicherung vorgesehen, die zumindest eine Blockiereinrichtung 9 umfaßt und in Schließstellung nach Art eines Schlosses einen Teil der Bewegungsmechanik des Deckelteils 4 übergreift und somit gegen eine Öffnung sichert. Die Blockiereinrichtung umfaßt einen auf einer beweglichen Grundplatte 11 gehaltenen Schwenkbolzen 10 und ist mit einer quer zum Fahrzeug 1 einwärts gerichteten Bewegungskomponente in seine sichernde Stellung verlagerbar. Die Grundplatte 11 mit dem Schwenkbolzen 10 kann dabei um eine zumindest nahezu in Fahrzeuglängsrichtung liegende Achse A verschwenken. Anstelle eines Schwenkbolzens 10 wäre auch ein quer verlagerbarer Riegel oder eine andere rein translatorisch oder überlagert translatorisch und rotatorisch mit einer Querkomponente verlagerbare Blockiereinrichtung 9 möglich.

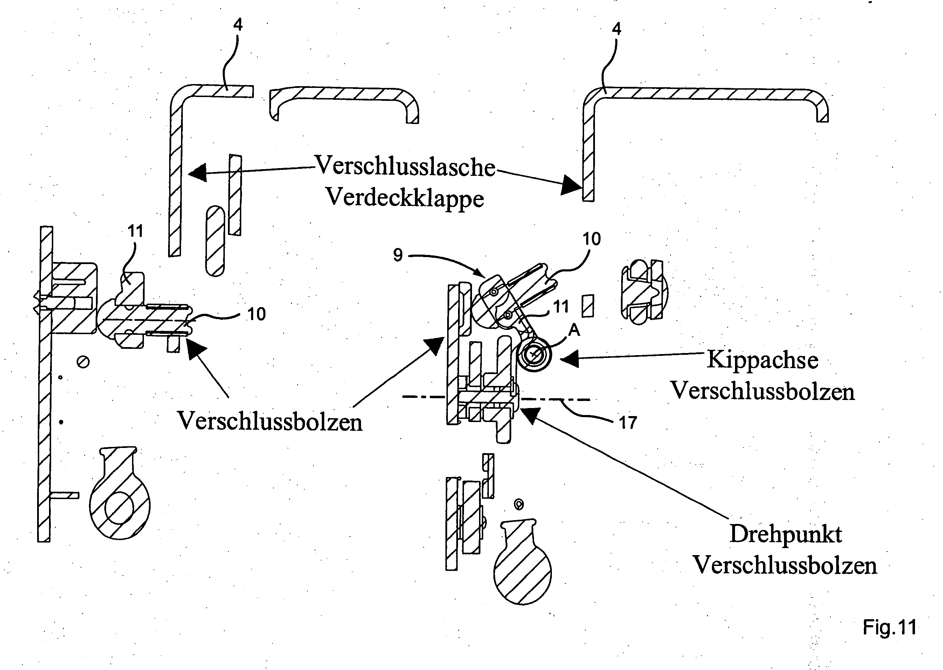

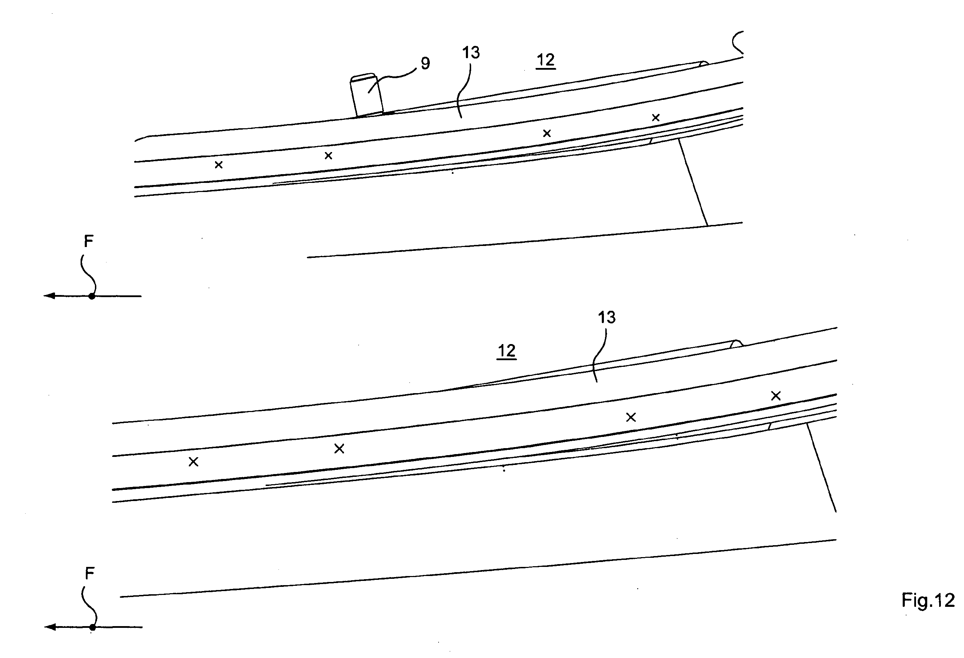

Wie insbesondere in den Figuren 11 und 12 deutlich wird, kann die die Blockiereinrichtung 9 in sichernder Stellung zumindest mit ihrem Schwenkbolzen 10 in einen lichten Raum eingreifen, der von dem Deckelteil 4 in seiner geschlossenen Stellung überdeckt ist. In geöffneter Stellung des Deckelteils 4 hingegen und freigebender Außer-Eingriff-Stellung der Blockiereinrichtung 9 ist diese vollständig unterhalb einer die von dem Deckelteil 4 verschließbare Eintrittsöffnung 12 seitlich nach Art eines Rahmens begrenzenden Karosseriebrüstung 13 optisch verdeckt gehalten. Die lichte Weite der dadurch für das Dach 2 zur Verfügung stehenden Öffnung 12 ist vergrößert. Der optische Eindruck dieser Öffnung 12 ist verbessert.

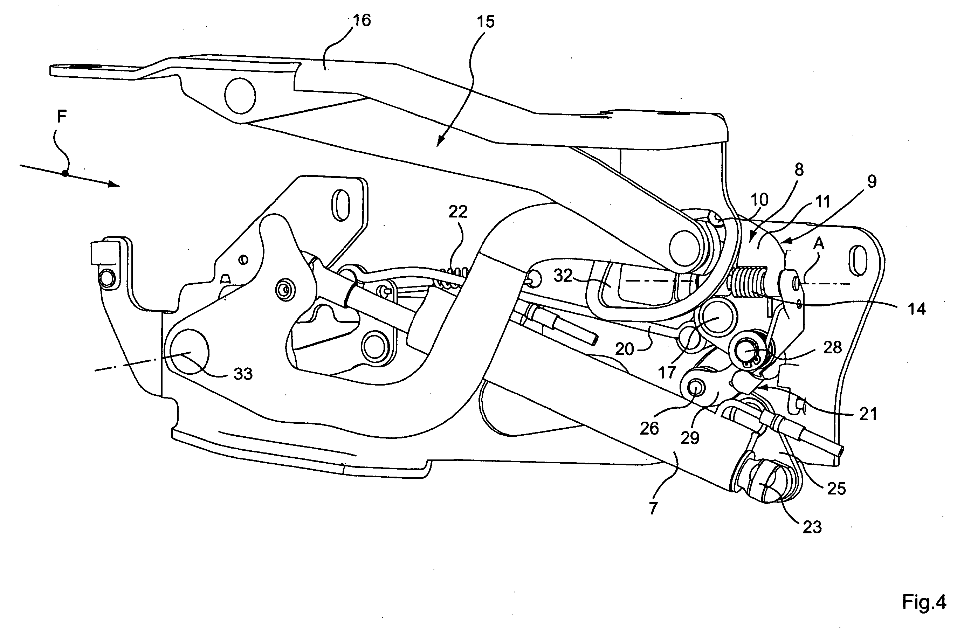

Das hier als Schwenkbolzen 10 ausgebildete Eingriffsglied der Blockiereinrichtung ist über Federkraft 14 im Außer-Eingriff-Sinn nach Fig. 4 vorgespannt, in der die Blockiereinrichtung 9 nach quer außen weggekippt liegt. Ohne eine äußere Krafteinwirkung ist daher von der Blockiereinrichtung 9 die Bewegung eines seitlichen Schwenkarms 15, der mit seinem oberen Ende 16 das Deckelteil 4 untergreift, nicht gehemmt.

Für die Bewirkung der Bewegung der Blockiereinrichtung 9 zwischen Eingriff- und Außer-Eingriff-Stellung ist deren Betätigung durch ein Antriebsorgan vorgesehen, das hier identisch mit dem die Deckelteilbewegung bewirkenden Antriebsorgan 7 ist. Dieses kann nahe seiner Schließstellung in Doppelfunktion die Blockiereinrichtung 9 mit Kraft beaufschlagen. Ein zusätzliches Antriebsorgan nur zum Ver- oder Entriegeln eines Schlosses ist somit entbehrlich.

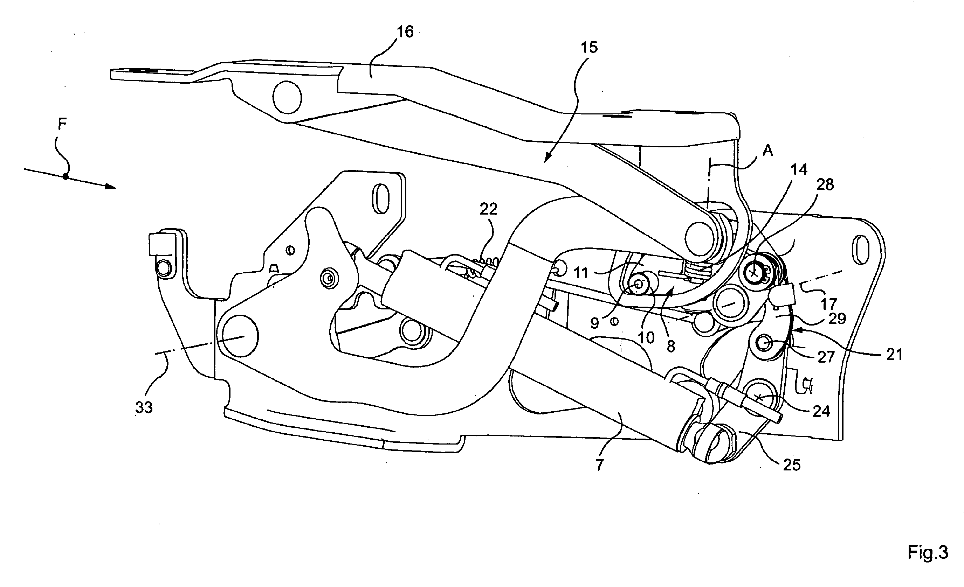

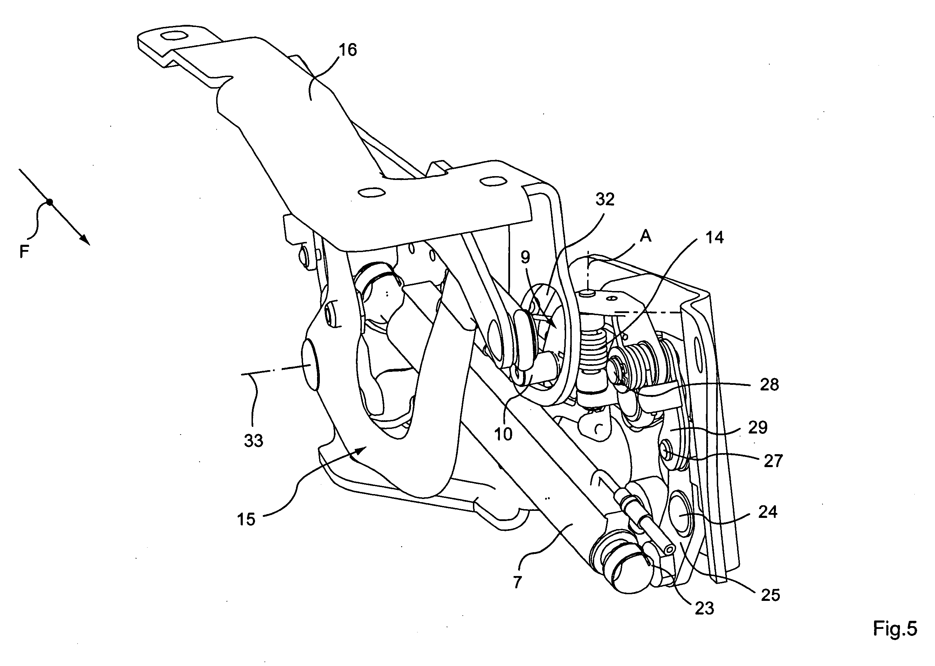

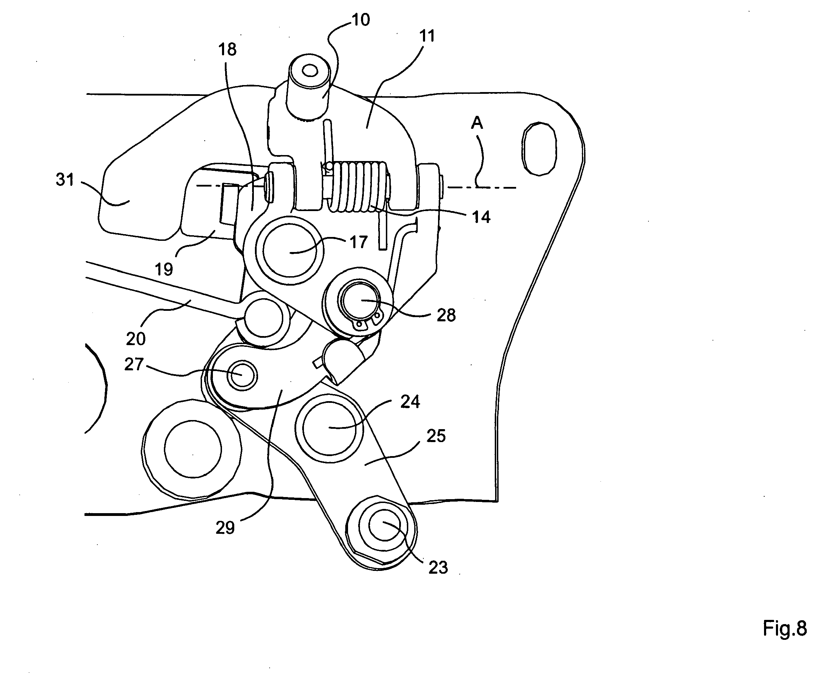

Um die Blockiereinrichtung 9 aus ihrer freigebenden Offenstellung nach Fig. 8 (Detailansicht) in die sichernde Schließstellung nach Fig. 3 oder Fig. 5 zu verlagern, muß die Blockiereinrichtung 9 um eine erste, etwa quer zum Fahrzeug 1 liegende Schwenkachse 17 um etwa 90° nach hinten verschwenkt werden. In der Offenstellung nach Fig. 8 ist dies jedoch durch eine Sperrklinke 18 verhindert, die ebenfalls um die Achse 17 schwenkbar ist und in ihrer sperrenden Stellung sich gegen einen Anschlag 19 lehnt (Fig. 8). Dadurch ist ein Einschwenken der Blockiereinrichtung 9 zwangsweise verhindert und somit ihre Offenstellung während der Bewegung des Schwenkarms 15 zuverlässig sichergestellt.

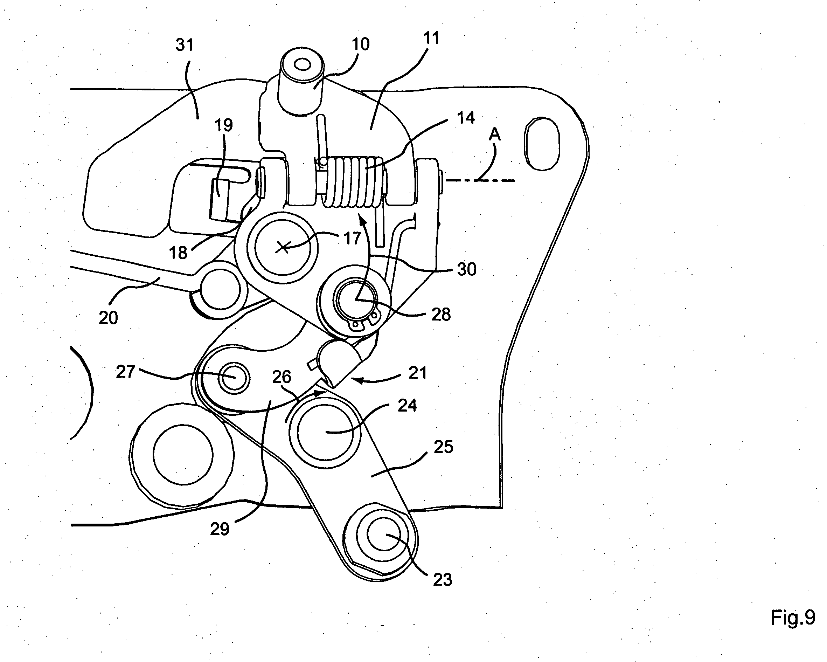

Erst in der letzten Phase des Einfahrens des Antriebsorgans 7, wenn der Schwenkarm 15 den offen stehenden Schwenkbolzen 10 nach unten hin passiert hat, wird die Zugstange 20 durch das Einfahren des Antriebs 7 so weit in Fahrtrichtung F entgegen der Kraft der zweiten Feder (Zugfeder) 22, die in Sperrrichtung wirkt, nach hinten gezogen, dass dadurch die Sperrklinke 18 um die Achse 17 im Uhrzeigersinn schwenkt (Übergang von Fig. 8 zu Fig. 9). Dadurch wird die Schwenkbewegung der Blockiereinrichtung 9 um die Fahrzeugquerachse freigegeben. Diese Schwenkbewegung wird erreicht durch das weitere Einfahren der Kolbenstange des Antriebsorgans 7. Dieses ist schwimmend gelagert und greift mit seinem kolbenbodenseitigen Ende an der Achse 23 eines um eine Querachse 24 schwenkbaren Lenker 25 des Vorgelegegetriebes 21 an. In der Stellung nach Fig. 9 kann dieser Lenker nach Freigabe der Sperrklinke 18 durch Einfahren des Antriebsorgans im Uhrzeigersinn (Richtung des Pfeils 26) verschwenkt werden. Dadurch wird der Drehpunkt 27 eines zweiten Lenkers 29 im Uhrzeigersinn mitgenommen und die Anlenkung 28 dieses Lenkers 29 an der Blockiereinrichtung 9 mit dieser um die über die festgehaltene Achse 17 entgegen dem Uhrzeigersinn in Richtung des Pfeils 30 verschwenkt.

Dadurch gelangt die Grundplatte 11 der Blockiereinrichtung 9 in ihre nach hinten verschwenkte Lage (Übergang von Fig. 4 zu Fig. 3), die Achse A gelangt von der horizontalen in eine ungefähr vertikale Stellung. Gleichzeitig mit diesem Verschwenken um die Querachse 17 wird der Schwenkbolzen 10 rückseitig an einer Führungsbahn 31 in Gestalt einer Abgleitschräge entlangbewegt. Dadurch wird während der Verlagerung um die Achse 17 in der Fahrzeuglängsebene die Querverlagerung der Blockiereinrichtung 9 um die Achse A bewirkt, der Schwenkbolzen 10 greift quer über einen Lenker des Gestänges 15 und sichert dieses dadurch gegen eine Aufwärtsbewegung im Öffnungssinn des Deckelteils 4.

Im gezeichneten Ausführungsbeispiel umfaßt das Gestänge 15 ein Eingriffsauge 32 für die Blockiereinrichtung 9, so dass an die Fertigungstoleranzen nur geringe Anforderungen zu stellen sind und ein großer Eingriffsraum für den Schwenkbolzen vorliegt.

Das Eingriffsauge 32 ist einem oberen, in Offenstellung des Deckelteils 4 nach oben ausgreifenden Ende 16 des Gestänges 15 zugeordnet, wodurch sich bei Kraftbeaufschlagung dieses Eingriffsauges 32 ein großes Drehmoment um die Deckeldrehachse 6 des Gestänges aufbringen läßt.

Damit kann die Blockiereinrichtung 9 nicht nur zum Sichern des Deckelteils 4 in seiner vollständig geschlossenen Stellung dienen, sondern in Doppelfunktion durch seine Bewegung in das Eingriffsauge 32 auch als Aktuator zur Unterstützung der Schließbewegung des Deckelteils 4 wirken. Der Eingriff findet noch während der absenkenden Deckelteilbewegung statt. Insbesondere in der Endphase, wenn dieses auf eine elastische Dichtungslinie am Rand 13 trifft und von dieser eine dem Zuziehen entgegenwirkende Kraft erfährt, kann der Aktuator zum Schließen des Deckelteils gegen diese im Öffnungssinn wirksame Kraft über einen Fangweg von typisch ungefähr 5 bis 20 Millimetern wirksam sein.

Eine manuelle Notbetätigung bei Ausfall des Antriebsorgans 7 ist ebenfalls möglich.

Sämtliche Teile der Deckelteilbewegung sind platzsparend und montagefreundlich an einem gemeinsamen Modul 34 gehalten und können als gemeinsame und justierte Einheit in den Rohbau der Karosserie 5 eingesetzt werden.

## Patentansprüche

1. Kraftfahrzeug (1) mit einem beweglichen und in der Karosserie (5) unterhalb eines Deckelteils (4) ablegbaren Dach oder Dachteil (2), wobei das Deckelteil (4) zur Freigabe einer Durchtrittsöffnung (12) des Daches (2) oder Dachteils aufbeweglich ist und wobei zumindest eine Sicherung (8) für die Halterung des Deckelteils (4) in einer geschlossenen Stellung vorgesehen ist, wobei die Sicherung (8) zumindest eine Blockiereinrichtung (9) umfaßt, die mit einer quer einwärts gerichteten Bewegungskomponente in sichernde Stellung verlagerbar ist, und wobei die Blockiereinrichtung (9) durch ein Antriebsorgan (7) beweglich ist,
**dadurch gekennzeichnet,**
**dass** dieses Antriebsorgan (7) das die Deckelteilbewegung bewirkende Antriebsorgan ist, das nahe seiner Schließstellung in Doppelfunktion die Blockiereinrichtung (9) beaufschlagt.

2. Kraftfahrzeug (1) nach Anspruch 1,
**dadurch gekennzeichnet,**
**dass** die Blockiereinrichtung (9) in sichernder Stellung in einen lichten Raum eingreift, der von dem Deckelteil (4) überdeckbar ist.

3. Kraftfahrzeug (1) nach Anspruch 2,
**dadurch gekennzeichnet,**
**dass** die Blockiereinrichtung (9) in Außer-Eingriff-Stellung unterhalb einer den vom Deckelteil überdeckbaren Raum seitlich begrenzenden Karosseriebrüstung (13) halterbar ist.

4. Kraftfahrzeug (1) nach einem der Ansprüche 1 bis 3,
**dadurch gekennzeichnet,**
**dass** die Blockiereinrichtung (9) einen Schwenkbolzen (10) umfaßt.

5. Kraftfahrzeug (1) nach Anspruch 4,
**dadurch gekennzeichnet,**
**dass** der Schwenkbolzen (10) im Außer-Eingriff-Sinn vorgespannt ist.

6. Kraftfahrzeug (1) nach einem der Ansprüche 1 bis 5,
**dadurch gekennzeichnet,**
**dass** die Blockiereinrichtung (9) durch das Antriebsorgan (7) zumindest nahezu senkrecht zu seiner Bewegungskomponente an einer Führungsbahn (31) entlangbewegbar ist, durch die eine Querverlagerung der Blockiereinrichtung (9) bewirkbar ist.

7. Kraftfahrzeug (1) nach einem der Ansprüche 1 bis 6,
**dadurch gekennzeichnet,**
**dass** die Blockiereinrichtung (9) in sichernder Eingriffsstellung einen Teil eines seitlichen, die Bewegung des Deckelteils (4) vermittelnden Gestänges (15) übergreift.

8. Kraftfahrzeug (1) nach Anspruch 7,
**dadurch gekennzeichnet,**
**dass** das Gestänge (15) ein Eingriffsauge (32) für die Blockiereinrichtung (9) umfaßt.

9. Kraftfahrzeug (1) nach Anspruch 8,
**dadurch gekennzeichnet,**
**dass** das Eingriffsauge (32) einem oberen, in Offenstellung des Deckelteils (4) nach oben ausgreifenden Ende (16) des Gestänges (15) zugeordnet ist.

10. Kraftfahrzeug (1) nach einem der Ansprüche 1 bis 9,
**dadurch gekennzeichnet,**
**dass** die Blockiereinrichtung (9) in Doppelfunktion durch seine Bewegung in die Eingriffsstellung auch als Aktuator zur Unterstützung der Schließbewegung des Deckelteils (4) wirkt.

11. Kraftfahrzeug (1) nach Anspruch 10,
**dadurch gekennzeichnet,**
**dass** der Aktuator zum Schließen des Deckelteils (4) gegen die im Öffnungssinn wirksame Kraft einer Dichtungslinie für den Rand (13) der Deckelteilauflage über einen Fangweg von 5 bis 20 Millimetern wirksam ist.

12. Kraftfahrzeug (1) nach einem der Ansprüche 1 bis 11,
**dadurch gekennzeichnet,**
**dass** das Deckelteil (4) in einem zweiten, gegensinnigen Schwenksinn zur Freigabe einer Beladeöffnung für Gepäck aufbeweglich ist.

## Claims

1. A motor vehicle (1), comprising a movable roof or roof part (2), which can be stowed in the vehicle body (5), below a lid part (4) which can be opened to uncover a passage opening (12) of the roof (2) or roof part, and wherein at least one locking device (8) is provided to hold the lid part (4) in a closed position, said locking device (8) comprising at least one blocking means (9) which can be displaced towards the locking position with a motion component directed transversely inward, and wherein the blocking means (9) can be moved by a drive element (7),
**characterised in that**
said drive element (7) is the drive element which effects the lid part movement and which, near its closed position, acts on the blocking means (9) in a double function.

2. The motor vehicle (1) according to claim 1, **characterised in that**, in the locking position, the blocking means (9) extends into an unobstructed space which can be covered by the lid part (4).

3. The motor vehicle (1) according to claim 2, **characterised in that**, in the disengaged position, the blocking means (9) can be held below a body sill (13) laterally limiting the space which can be covered by the lid part.

4. The motor vehicle (1) according to any one of claims 1 to 3, **characterised in that** the blocking means (9) comprises a pivot pin (10).

5. The motor vehicle (1) according to claim 4, **characterised in that** the pivot pin (10) is biased in the disengaging direction.

6. The motor vehicle (1) according to any one of claims 1 to 5, **characterised in that** the blocking means (9) can be moved by the drive element (7), at least nearly perpendicularly to its motion component, along a guideway (31) allowing to effect a transverse displacement of the blocking means (9).

7. The motor vehicle (1) according to any one of claims 1 to 6, **characterised in that** the blocking means (9), in the locking engagement position, extends over part of a lateral linkage (15) conveying the movement of the lid part (4).

8. The motor vehicle (1) according to claim 7, **characterised in that** the linkage (15) comprises an engagement eye (32) for the blocking means (9).

9. The motor vehicle (1) according to claim 8, **characterised in that** the engagement eye (32) is assigned to an upper end (16) of the linkage (15), said upper end (16) protruding upwards in the open position of the lid part (4).

10. The motor vehicle (1) according to any one of claims 1 to 9, **characterised in that** the blocking means (9) double functions, by its movement into the engagement position, also as an actuator supporting the closing movement of the lid part (4).

11. The motor vehicle (1) according to claim 10, **characterised in that** the actuator for closing the lid part (4) acts against the force of a sealing line for the edge (13) of the lid part support over a stopping distance of 5 to 20 millimetres, said force acting in the opening direction.

12. The motor vehicle (1) according to any one of claims 1 to 11, **characterised in that** the lid part (4) can be opened in a second, opposite pivoting direction to uncover a load opening for luggage.

## Revendications

1. Véhicule automobile (1), comportant un toit ou élément de toit mobile (2) qui est escamotable dans la carrosserie (5), sous un élément de couvercle (4) ouvrable afin d'exposer une ouverture de passage (12) dudit toit (2) ou élément de toit, au moins un dispositif d'arrêt (8) étant prévu pour tenir l'élément de couvercle (4) dans une position fermée, ledit dispositif d'arrêt (8) comportant au moins un moyen de blocage (9) déplaçable vers la position d'arrêt avec un composant de mouvement dirigé transversalement vers l'intérieur, et le moyen de blocage (9) étant déplaçable par un élément d'entraînement (7),
**caractérisé en ce que**
ledit élément d'entraînement (7) est l'élément d'entraînement effectuant le mouvement de l'élément de couvercle et agissant, près de sa position fermée, sur le moyen de blocage (9) en double fonction.

2. Véhicule automobile (1) selon la revendication 1, **caractérisé en ce que** le moyen de blocage (9), en position d'arrêt, vient en prise dans un espace libre qui peut être couvert par l'élément de couvercle (4).

3. Véhicule automobile (1) selon la revendication 2, **caractérisé en ce que** le moyen de blocage (9), en position dégagée, peut être tenu au-dessous d'un parapet (13) de la carrosserie qui délimite latéralement l'espace qui peut être couvert par l'élément de couvercle.

4. Véhicule automobile (1) selon l'une quelconque des revendications 1 à 3, **caractérisé en ce que** le moyen de blocage (9) comporte un axe de pivotement (10).

5. Véhicule automobile (1) selon la revendication 4, **caractérisé en ce que** l'axe de pivotement (10) est précontraint dans la direction de dégagement.

6. Véhicule automobile (1) selon l'une quelconque des revendications 1 à 5, **caractérisé en ce que** le moyen de blocage (9) est déplaçable par l'élément d'entraînement (7), au moins presque perpendiculaire à son composant de mouvement, selon un guidage (31) permettant d'effectuer un déplacement transversal du moyen de blocage (9).

7. Véhicule automobile (1) selon l'une quelconque des revendications 1 à 6, **caractérisé en ce que** le moyen de blocage (9), dans la position de prise et d'arrêt, s'étend sur une partie d'une tringlerie latérale (15) transmettant le mouvement de l'élément de couvercle (4).

8. Véhicule automobile (1) selon la revendication 7, **caractérisé en ce que** la tringlerie (15) comporte un oeillet de mise en prise (32) pour le moyen de blocage (9).

9. Véhicule automobile (1) selon la revendication 8, **caractérisé en ce que** l'oeillet de mise en prise (32) est associé avec une extrémité supérieure (16) de la tringlerie (15), ladite extrémité supérieure (16) faisant saillie vers le haut dans la position ouverte de l'élément de couvercle (4).

10. Véhicule automobile (1) selon l'une quelconque des revendications 1 à 9, **caractérisé en ce que** le moyen de blocage (9) sert une double fonction, par son mouvement vers la position de mise en prise, d'actionneur supportant le mouvement de fermeture de l'élément de couvercle (4).

11. Véhicule automobile (1) selon la revendication 10, **caractérisé en ce que** l'actionneur destiné à fermer l'élément de couvercle (4) agit contre l'effort d'une ligne d'étanchéité pour le bord (13) du support de l'élément de couvercle sur une distance d'arrêt de 5 à 20 millimètres, ledit effort agissant dans la direction d'ouverture.

12. Véhicule automobile (1) selon l'une quelconque des revendications 1 à 11, **caractérisé en ce que** l'élément de couvercle (4) est ouvrable dans une deuxième direction de pivotement opposée pour exposer une ouverture de chargement de bagages.
